# EUROPÄISCHE PATENTSCHRIFT

(11) **EP 0 950 497 B1**
(45) Veröffentlichungstag und Bekanntmachung des Hinweises auf die Patenterteilung: **16.05.2001**
(21) Anmeldenummer: 97119890.8
(22) Anmeldetag: 13.11.1997
(51) Int. Cl.: B29C 47/00, B29C 47/90

(54) **Vorrichtung zum Abkühlen und Kalibrieren extrudierter Kunststoffprofile**
Apparatus for cooling and calibrating extruded plastic profile
Dispositif de refroidissement et de calibrage pour un profile extrudé en matière plastique

(43) Veröffentlichungstag der Anmeldung: 20.10.1999
(73) Patentinhaber: Kömmerling Kunststoff GmbH, 66954 Pirmasens (DE)
(72) Erfinder: Sander, Ralf, Dr., 67657 Kaiserslautern (DE); Beer, Oliver, 66954 Pirmasens (DE)
(74) Vertreter: Vièl, Christof, Dipl.-Ing.

(56) Entgegenhaltungen:
- EP-A- 0 659 536
- DE-A- 19 504 981
- DE-C- 19 622 419
- US-A- 5 480 295
- US-A- 5 626 807

## Beschreibung

Die Erfindung betrifft eine Vorrichtung zum Abkühlen und Kalibrieren extrudierter Kunststoffprofile, bestehend aus hinter einem Extruder mit nachgeschalteter Düse angeordneten Trockenkalibratoren, wobei im Anschluß an die Trockenkalibratoren in einem mit Kühlmedium durchspülten Tank angeordnete Stützelemente zur weiteren Kalibrierung vorgesehen sind.

Eine derartige Vorrichtung ist beispielsweise in der WO 97/46366 beschrieben. Profil-Extrusionsanlagen bestehen aus den drei verfahrenstechnischen Hauptkomponenten Extruder, Düse und Kalibrier- und Kühlstrecke. Der Extruder bereitet das Rohmaterial zum homogenen und verarbeitbaren Schmelzestrang auf und preßt diesen durch die angeflanschte Düse, die den Schmelzestrang zum Profil ausformt. Kurz nach dem Düsenaustritt tritt der noch sehr instabile Profilstrang in eine Kalibrier- und Kühlstrecke ein. Dort wird er solange abgekühlt und durch anliegendes Vakuum in Form gehalten, bis er genug Eigenstabilität aufweist.

Um das Profil extrudieren zu können, ist zusätzlich ein Abzug erforderlich, der das Halbzeug unter Wandreibung durch die Kalibrier- und Kühlstrecke zieht.

Üblicherweise werden innerhalb der Kalibrier- und Kühlstrecke mehrere, in der Regel 3 bis 8 hintereinandergeschaltete Trockenkalibratoren mit einer Länge von jeweils ca. 250 bis 500 mm eingesetzt. Um der thermischen Schwindung des Extrudats Rechnung zu tragen, nehmen die Profilabmaße von Trockenkalibrator zu Trockenkalibrator in Extrusionsrichtung ab, wobei sie innerhalb eines Trockenkalibrators konstant sind. Es ergibt sich somit eine Stufenfunktion.

Obwohl Trockenkalibratoren am Anfang einer Kalibrier- und Kühlstrecke stets erforderlich sind, um das noch sehr weiche Profil mit häufig sehr feinen Profildetails (Nasen, Federn, Verrasterungen, etc.) in die gewünschte, maßlich bestimmte Form zu bringen und zu halten, haben sie den Nachteil, daß sie das Profil ungleichmäßig abkühlen und daß ungleichmäßig hohe Reibkräfte entlang des Profilumfangs zwischen Kalibratorwand und Profil auftreten. Diese Reibkräfte sind in erheblichem Umfang für das im Profil verbleibende Schrumpfpotential, das besonders in den äußeren Profilrandschichten auftritt, verantwortlich. Hinzu kommt, daß Trockenkalibratoren in der Herstellung aufwendig und daher teuer sind.

Aus der ungleichmäßigen Abkühlung und dem Einfluß der Reibkräfte resultieren eingefrorene Spannungen im Profil, die als Krümmungen des fertig extrudierten Halbzeuges zum Ausdruck kommen. Ein weiterer, noch Tage nach der Extrusion auftretender Spannungsabbau kann zur Überschreitung der geforderten Maßtoleranzen führen oder ein kostspieliges Tempern zum Spannungsabbau erfordern.

Im Anschluß an die Trockenkalibratoren sind in der Regel Naßkalibratoren in Form von Stützelementen (auch als "Blenden" oder "Reiter" bezeichnet) zum Führen des Profils innerhalb eines Wasserbades oder innerhalb eines Sprühbades angeordnet. Ein Aufbau eines derartigen Naßkalibrators ist beispielsweise aus der DE-A-195 04 981 bekannt. Auch die EP-A-0 659 537 und die EP-A- 0 659 536 befassen sich mit der Ausbildung eines Naßkalibrators. Die Stützvorrichtungen weisen üblicherweise Längen (in Extrusionsrichtung gemessen) von 15 bis 25 mm auf und sind in einem oder in mehreren Vakuumtanks einzeln - entweder mit in Extrusionsrichtung steigendem Abstand untereinander oder mit gleichbleibendem Abstand und von Vakuumtank zu Vakuumtank leicht steigendem Vakuum - angeordnet. Allerdings ergibt sich in den Bereichen zwischen zwei Stützelementen ein sogenanntes "Aufpumpen" des Profils, was unter anderem zu einem erhöhten Verschleiß der Stützelemente führt. Hierunter versteht man die Geometrieverformung der unter Innendruck stehenden Kunststoffprofile, wobei sich die großflächigen Außenwände überproportional einer Kreisgeometrie zu nähern versuchen. Die anhängenden Profilbereiche werden dadurch in Mitleidenschaft gezogen. Dieser "Aufpumpeffekt" ist am Anfang der Kalibrierstrecke, wo das Profil noch geringe Eigensteifigkeit aufweist, am ausgeprägtesten.

Aus der US-A-5,480,295 ist eine Kalibriervorrichtung bekannt, bei der Stützvorrichtungen vorhanden sind, die jeweils aus zwei Platten gebildet sind. Die Platten weisen Ausschnitte auf, die bei sich teilweise überdeckenden Platten eine Durchgangsöffnung für das extrudierte Material bilden und sind beabstandet.

Aufgabe der Erfindung ist es, eine Vorrichtung zum Abkühlen und Kalibrieren extrudierter Kunststoffprofile gemäß dem Oberbegriff zu entwickeln, mit der Profile mit weniger eingefrorenen Eigenspannungen hergestellt werden können und die die angegebenen Nachteile der bekannten Vorrichtungen vermeidet.

Diese Aufgabe wird erfindungsgemäß bei einer Vorrichtung gemäß dem Oberbegriff dadurch gelöst, daß Gruppen von mindestens zwei üblichen, ohne Zwischenraum angeordneten Stützelementen in dem Tank angeordnet sind.

Zweckmäßige Weiterbildungen der Erfindung sind Gegenstand der abhängigen Ansprüche.

Es ist vorteilhaft, daß die Stützelemente in Gruppen von ca. 100 bis 300 mm Länge in Extrusionsrichtung angeordnet sind.

Es ist zweckmäßig, daß jeweils vier bis zehn Stützelemente ohne Zwischenraum nebeneinander zu einer Gruppe angeordnet sind.

Es ist zweckmäßig, daß der Abstand zwischen einzelnen Gruppen von Stützelementen in Extrusionsrichtung zunimmt.

Eine Ausbildung der Erfindung besteht darin, daß mindestens vier Gruppen von Stützelementen in dem Tank vorgesehen sind.

Es ist vorteilhaft, daß die Stützelemente auf einer in Längsrichtung des Tanks verlaufenden Führung angeordnet sind. Innerhalb dieser können sie entweder fixiert oder selbstzentrierend sein.

Weiterhin ist es vorteilhaft, daß der Tank mit Unterdruck beaufschlagt ist.

Eine Weiterbildung der Erfindung besteht darin, daß die Stützelemente in verschiedenen Tanks mit von Tank zu Tank in Extrusionsrichtung leicht steigendem Vakuum angeordnet sind.

Eine Ausbildung der Erfindung besteht darin, daß nur ein Trockenkalibrator vorgesehen ist.

Weiterhin ist es zweckmäßig, daß nur zwei Trockenkalibratoren vorgesehen sind.

Es ist ebenfalls vorteilhaft, daß statt der Gruppen von mindestens zwei üblichen Stützelementen ein die Länge der Gruppen aufweisendes Stützelement vorgesehen ist.

Schließlich besteht eine Ausgestaltung der Erfindung darin, daß die Stützelemente zur Kühlung des Kunststoffprofils in Extrusionsrichtung verlaufende Durchgangsbohrungen aufweisen.

Die Vorteile der Erfindung gegenüber dem Stand der Technik bestehen im wesentlichen darin, daß die kalibrierten Profile weniger eingefrorene Eigenspannungen aufweisen und daß der Verschleiß der Stützelemente geringer ist. Hinzu kommt, daß der Aufbau der Kalibrier- und Kühlstrecke durch das Wegfallen von Trockenkalibratoren und Vakuumpumpen einfacher und kostengünstiger wird.

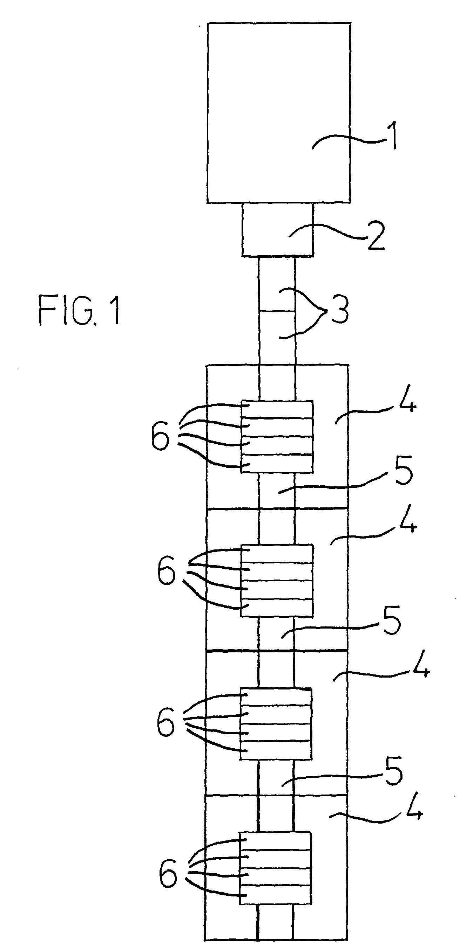

Im folgenden wird die Erfindung anhand von Zeichnungen beschrieben und erläutert. Es zeigt
- Fig. 1: eine schematische Darstellung der erfindungsgemäßen Vorrichtung.

Wie aus Fig. 1 ersichtlich, ist die erfindungsgemäße Vorrichtung hinter einem Extruder 1 mit der Extrudierdüse 2 angeordnet. Statt der üblichen 3 bis 8 Trockenkalibratoren 3 liegen bei der erfindungsgemäßen Vorrichtung nur ein bis zwei Trockenkalibratoren 3 vor. Die Anzahl der Trockenkalibratoren 3 hängt von der Extrusionsgeschwindigkeit und der Profilgeometrie ab. Es ist jedoch in jedem Fall ein Trockenkalibrator 3 erforderlich, um die sogenannten Preßmaßbereiche auszubilden, die durch einen Überdruck in den Hohlkammern des Profils nicht erreicht werden können.

An den oder die Trockenkalibratoren schließt sich der Naßkalibrierbereich an. Die Naßkalibrierung wird in mit einem Kühlmedium (in der Regel Wasser) gefüllten Tank 4, der mit Unterdruck beaufschlagbar ist, durchgeführt.

In diesem Tank 4 sind auf in Längsrichtung des Tanks 4 verlaufenden Führungen 5 Gruppen von an sich bekannten Stützelementen 6 angeordnet, wobei zwischen den einzelnen Gruppen von Stützelementen 6 das Kühlmedium zirkuliert. Die Gruppen von Stützelementen 6 weisen eine Länge von ca. 100 mm bis 250 mm auf, sind also deutlich länger als die üblichen einzeln eingesetzten Stützelemente 6. Sie setzen sich somit jeweils aus ca. 4 bis 10 üblichen Stützelementen 6 zusammen, wobei selbstverständlich statt der üblichen Stützelemente 6 auch ein einziges, die Länge der Gruppen aufweisendes Stützelement 6 verwendet werden kann.

Die Gruppen von Stützelementen 6 sind entweder - wie in Fig. 1 dargestellt - mit gleichbleibendem Abstand untereinander angeordnet, wobei dann vorzugsweise eine Anordnung der Gruppen von Stützelementen 6 in einzelnen, hintereinander angeordneten Tanks 4 mit in Extrusionsrichtung steigendem Vakuum erfolgt oder aber der Abstand zwischen den Gruppen von Stützelementen 6 nimmt in Extrusionsrichtung zu.

Bei marktüblichen Stützelementen 6 von ca. 15 bis 25 mm Länge (in Extrusionsrichtung) ergibt sich bei einer Extrusionsgeschwindigkeit von 3 m/min eine Aufenthaltszeit von ca. nur 0,4 Sekunden innerhalb eines Stützelementes 6. Bei den erfindungsgemäßen Gruppen von Stützelementen erhöht sich die Aufenthaltszeit auf 2 Sekunden bei 100 mm Länge bzw. auf 5 Sekunden bei 250 mm Länge. Als Folge der zunehmenden Aufenthaltszeit ("Bügelzeit") ist neben einer verbesserten Oberflächenqualität des extrudierten Profils auch ein verminderter Verschleiß an den Stützelementen feststellbar. Der höhere Verschleiß bei Verwendung der kurzen Stützelementen 6 ist darin begründet, daß sich das Profil zwischen den einzelnen Stützelementen 6 stärker deformiert ("aufbläst") als bei den längeren Gruppen von Stützelementen 6 und mit dieser Deformation in das nächste Stützelement 6 eintritt.

Gegen die Verwendung derartiger langer Gruppen von Stützelementen 6 sprach das in der Fachwelt bestehende Vorurteil, daß die Kühlung des Kunststoffprofils in längeren Stützelementen 6 meßbar schlechter ist. Tatsächlich trifft dieses Vorurteil jedoch nicht zu.

Unter der Annahme, daß das Kunststoffprofil und die metallische Stützelementwand an der Kontaktfläche die gleiche Temperatur aufweisen (unendlicher Wärmeübergang), ergibt sich durch die geringe Wärmeleitfähigkeit des extrudierten Kunststoffes ein steiler Temperaturgradient in der Nähe der Kalibratorwand.

In diesem idealen Fall erreicht der durch reine Wärmeleitung abgeführte Wärmestrom sein Maximum. In der Praxis ist aber ein idealer thermischer Kontakt oft nicht gegeben, so daß der abgeführte Wärmestrom durch einen Wärmeübergang gebremst wird. Im dann besten Fall füllt das Kühlmedium den Spalt zwischen Kunststoffprofil und Stützelement 6 aus, mit der Folge, daß ein endlicher Wärmewiderstand überwunden werden muß. Im schlechtesten Fall verbleibt eine Luftschicht zwischen Kunststoffprofil und Stützelement 6, die die Wärmeabfuhr behindert.

Das jedoch ein sehr hoher Wärmeübergangswert an der Profiloberfläche nicht von ausschlaggebender Bedeutung ist, läßt sich durch die niedrige Wärmeleitfähigkeit des Kunststoffes erklären. Grundsätzlich ist eine möglichst kalte Profilaußenhaut nicht von Nachteil, da sie den Temperaturgradienten, d.h. die treibende Kraft in der Randschicht des Extrudates steil hält. Andererseits wird die aus dem Inneren der Kunststoffwand nachströmende Wärme durch die besagte geringe Leitfähigkeit behindert, so daß ein hoher Wärmeübergangswert nur bedingt praxisrelevant ist. Wann welcher der drei zuvor geschilderten Fälle und in welcher Häufigkeit zutrifft, kann nicht vorausgesagt werden. Eine schlechtere Kühlung ist in der Praxis nicht beobachtet worden.

Zur Steigerung der Wärmeabfuhr können die Stützelemente 6 in Extrusionsrichtung verlaufende Durchgangsbohrungen, die kühlungsgerecht um das Profil angeordnet sind, aufweisen.

Innerhalb einer erfindungsgemäßen Vorrichtung laufen die folgenden Vorgänge ab:

Das anfängliche Ausbilden der Profildimension einschließlich aller Profildetails und Preßmaßbereiche erfolgt in der bzw. den Trockenkalibratoren 3. Zwischen den Trockenkalibratoren 3 können mit Kühlmedium gefüllte Bäder die Kühlung des Profils erhöhen und die Reibung zwischen Extrudat und Kalibratorwand vermindern. Der bzw. die Trockenkalibratoren gewährleisten die Ausbildung einer glänzenden Profiloberfläche.
Durch den frühzeitigen Eintritt in den Vakuumtank (statt weiterer Trockenkalibratoren) erfolgt ein frühzeitiges Umspülen und damit entlang des Umfangs ein gleichmäßiges, intensives und eigenspannungsarmes Kühlen des Halbzeuges durch das Kühlmedium. Durch den frühzeitigen Eintritt in die als Naßkalibratoren dienenden Gruppen von Stützelementen 6 wird das Profil unter dem hydrostatischen Überdruck an die Wände der Stützelelemente 6 gedrückt, wobei gleichzeitig eine Formgebung und eine gute Kühlung erfolgt. Das ungleichmäßige Ansaugen durch Vakuumkanäle, wie es in den Trockenkalibratoren erfolgt, entfällt.

Die langsam und folglich meist zuletzt abkühlenden Innenstege in dem Profil üben nach Unterschreiten des Vikat-Erweichungspunktes eine steigende Zugkraft auf die Profilwände aus; dieser kann durch einen gleichmäßigen Unterdruck in dem Tank bestmöglich entgegengewirkt werden.

Durch den modularen Aufbau kann die Anzahl der Trocken- und Naßkalibratoren im Rahmen der angegebenen Stückzahlen der angestrebten Extrusionsgeschwindigkeit individuell angepaßt werden. Der gesamte Aufbau der Kalibrier- und Kühlstrecke erlaubt durch die geringen Längen der einzelnen Kalibriereinheiten ein fertigungsgerechtes Bearbeiten durch Fräsen, Schleifen, Erodieren und Bohren. Hinzu kommt, daß in die Naßkalibratoren keine Schlitze und Bohrungen für die Evakuierung von Luft eingebracht werden müssen. Die geringe Anzahl von Kalibriereinheiten gegenüber den in höheren Stückzahlen verwendeten, einfacher aufgebauten, marktüblichen Stützelementen 6 erleichtert den in Extrusionsrichtung fluchtenden Aufbau und die Nacharbeit beim Einfahren des Werkzeuges.

## Patentansprüche

1. Vorrichtung zum Abkühlen und Kalibrieren extrudierter Kunststoffprofile, bestehend aus hinter einem Extruder (1) mit nachgeschalteter Düse (2) angeordneten Trockenkalibratoren (3), wobei im Anschluß an die Trockenkalibratoren (3) in mindestens einem mit Kühlmedium durchspülten Tank (4) angeordnete Stützelemente (6) zur weiteren Kalibrierung vorgesehen sind, **dadurch gekennzeichnet,** daß Gruppen von mindestens zwei üblichen, ohne Zwischenraum angeordneten Stützelementen (6) in dem Tank (4) angeordnet sind.

2. Vorrichtung gemäß Anspruch 1, **dadurch gekennzeichnet,** daß die Stützelemente (6) in Gruppen von ca. 100 bis 300 mm Länge (gemessen in Extrudierrichtung) angeordnet sind.

3. Vorrichtung gemäß Anspruch 1, **dadurch gekennzeichnet,** daß jeweils vier bis zehn Stützelemente (6) ohne Zwischenraum nebeneinander zu einer Gruppe angeordnet sind.

4. Vorrichtung gemäß Anspruch 1, **dadurch gekennzeichnet,** daß der Abstand zwischen einzelnen Gruppen von Stützelementen (6) in Extrusionsrichtung zunimmt.

5. Vorrichtung gemäß Anspruch 1, **dadurch gekennzeichnet,** daß mindestens vier Gruppen von Stützelementen (6) in dem Tank (4) vorgesehen sind.

6. Vorrichtung gemäß Anspruch 1, **dadurch gekennzeichnet,** daß die Stützelemente (6) auf einer in Längsrichtung des Tanks (4) verlaufenden Führung (5) angeordnet sind.

7. Vorrichtung gemäß Anspruch 1, **dadurch gekennzeichnet,** daß der Tank (4) mit Unterdruck beaufschlagt ist.

8. Vorrichtung gemäß Anspruch 1, **dadurch gekennzeichnet,** daß die Stützelemente (6) in verschiedenen Tanks (4) mit von Tank (4) zu Tank (4) in Extrusionsrichtung leicht steigendem Vakuum angeordnet sind.

9. Vorrichtung gemäß Anspruch 1, **dadurch gekennzeichnet,** daß nur ein Trockenkalibrator (3) vorgesehen ist.

10. Vorrichtung gemäß Anspruch 1, **dadurch gekennzeichnet,** daß nur zwei Trockenkalibratoren (3) vorgesehen sind.

11. Vorrichtung gemäß Anspruch 1, **dadurch gekennzeichnet,** daß statt der Gruppen von mindestens zwei üblichen Stützelementen (6) ein die Länge der Gruppen aufweisendes Stützelement (6) vorgesehen ist.

12. Vorrichtung gemäß Anspruch 1, **dadurch gekennzeichnet,** daß die Stützelemente (6) zur Kühlung des Kunststoffprofils in Extrusionsrichtung verlaufende Durchgangsbohrungen aufweisen.

## Claims

1. An apparatus for cooling and calibrating extruded plastic profile, comprising dry calibrators (3) arranged behind an extruder (1) with a nozzle (2) connected downstream, with sizing elements (6) for further calibration being provided behind the dry calibrators (3) in at least one tank (4) flushed with cooling medium, **characterized in that** groups of at least two conventional, unspaced sizing elements (6) are arranged in the tank (4).

2. The apparatus of claim 1, **characterized in that** the sizing elements (6) are arranged in groups approximately 100 to 300 mm in length (measured in the direction of extrusion).

3. The apparatus of claim 1, **characterized in that** four to ten unspaced sizing elements (6) are arranged beside each other in each case to make up a group.

4. The apparatus of claim 1, **characterized in that** the space between individual groups of sizing elements (6) increases in the direction of extrusion.

5. The device of claim 1, **characterized in that** at least four groups of sizing elements (6) are provided in the tank (4).

6. The apparatus of claim 1, **characterized in that** the sizing elements (6) are arranged on a guide element (5) running in the longitudinal direction of the tank.

7. The apparatus of claim 1, **characterized in that** the tank (4) is under partial vacuum.

8. The apparatus of claim 1, **characterized in that** the sizing elements (6) are arranged in different tanks (4), with the vacuum increasing slightly from tank (4) to tank (4) in the direction of extrusion.

9. The apparatus of claim 1, **characterized in that** only one dry calibrator (3) is provided.

10. The apparatus of claim 1, **characterized in that** only two dry calibrators (3) are provided.

11. The apparatus of claim 1, **characterized in that** instead of the groups of at least two conventional sizing elements (6), one sizing element (6) having the length of the groups is provided.

12. The apparatus of claim 1, **characterized in that** for cooling the plastic profile, the sizing elements (6) have through holes running in the direction of extrusion.

## Revendications

1. Dispositif de refroidissement et de calibrage de profilés extrudés en matière plastique, constitué de calibreurs à sec (3) disposés derrière une extrudeuse (1) munie d'une tuyère (2) placée en aval, des éléments de support étant prévus dans une cuve (4) traversée par un liquide de refroidissement à la suite des calibreurs à sec pour un calibrage supplémentaire, caractérisé en ce que des groupes d'au moins deux éléments de support (6) courants sont placés sans espace intermédiaire dans la cuve (4).

2. Dispositif selon la revendication 1, **caractérisé en ce que** les éléments de support sont rangés en groupes d'une longueur, dans le sens de l'extrusion, d'environ 100 à 300 mm.

3. Dispositif selon la revendication 1, **caractérisé en ce que** quatre à dix éléments de support (6) sont placés dans un groupe les uns à côté des autres sans espace intermédiaire.

4. Dispositif selon la revendication 1, **caractérisé en ce que** la distance entre les différents groupes d'éléments de support (6) augmente dans le sens de l'extrusion.

5. Dispositif selon la revendication 1, **caractérisé en ce qu'**au moins quatre groupes d'éléments de support sont prévus dans la cuve.

6. Dispositif selon la revendication 1, caractérisé en ce que les éléments de support (6) soient disposés sur un guide/jambage (5) s'étendant en direction de la longueur de la cuve (4).

7. Dispositif selon la revendication 1, **caractérisé en ce que** la cuve (4) est mise en sous-pression.

8. Dispositif selon la revendication 1, **caractérisé en ce que** les éléments de support (6) sont placés dans des cuves différentes avec un vide augmentant légèrement de cuve (4) en cuve (4) dans le sens de l'extrusion.

9. Dispositif selon la revendication 1, **caractérisé en ce qu'**un seul calibreur à sec (3) est prévu.

10. Dispositif selon la revendication 1, **caractérisé en ce que** deux calibreurs à sec (3) sont prévus.

11. Dispositif selon la revendication 1, **caractérisé en ce qu'**il est prévu, au lieu des groupes d'au moins deux éléments de support courants (6), un élément de support (6) ayant la longueur desdits groupes.

12. Dispositif selon la revendication 1, **caractérisé en ce que** les éléments de support (6) présentent de trous de passage s'étendant en direction de l'extrusion pour refroidir le profilé en matière plastique.
